# EUROPEAN PATENT APPLICATION

(11) **EP 4 707 231 A1**
(43) Date of publication of application: **11.03.2026**
(21) Application number: 24199141.3
(22) Date of filing: 09.09.2024
(51) Int. Cl.: C01B 3/04, F25J 3/02, F25J 1/02

(54) **AMMONIA CRACKING: HYDROGEN PURIFICATION WITH COLDBOX AND PRESSURE SWING ADSORBER**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: LUTZ, Michael, 60439 Frankfurt am Main (DE); ROZIERES, Maxime, 94503 Champigny-sur-Marne (FR); DUARTE TARAZONA, Annie, 75007 Paris (FR); KOT, Krzysztof, 31-545 Krakow (PL); SHRIVASTAVA, Swatantra Kumar, 60439 Frankfurt am Main (DE); HUEBEL, Mirko, 60439 Frankfurt am Main (DE)
(74) Representative: Air Liquide

(57) **Abstract**

A process and apparatus for the production of hydrogen, wherein the process comprises the steps of: introducing an ammonia feed (2) into a catalytic cracker (10) under conditions effective for producing a cracked stream (12) ; drying the cracked stream with a temperature swing adsorption (TSA) unit (20) comprising at least two adsorbent beds (A, B) to form a dry cracked stream (22); introducing the dry cracked stream into a coldbox (30), wherein the cold box encloses a heat exchanger and a partial condensation vessel, wherein the heat exchanger is configured to cool the dry cracked stream, wherein the partial condensation vessel is configured to produce a nitrogen enriched stream (34) and a hydrogen enriched stream (32); and introducing the hydrogen enriched stream (32), after warming in the heat exchanger, to a pressure swing adsorber (PSA) unit (40) to form a hydrogen product stream 42 and a PSA off-gas (44).

## Description

### Field of the Invention

The present invention relates to a process and an apparatus for cracking of ammonia to form hydrogen.

### Background of the Invention

In an effort to reduce the effects of carbon dioxide emissions, new energy carriers are becoming increasingly more important. One of the leading energy carriers is hydrogen; however, due to its small molecular size, high-pressure requirements, and very low boiling point, transportation of elemental hydrogen is difficult and costly.

Ammonia (NH₃) has raised some attention in the literature, since existing infrastructure can be used for storage and transportation. As such, production of hydrogen using ammonia, instead of natural gas, is foreseen to be the future of the next generation of hydrogen production.

In one known method of hydrogen production from ammonia, a vaporized ammonia feed is fed into an ammonia cracker under conditions effective for cracking the ammonia into nitrogen and hydrogen, along with residual ammonia. This cracked stream is then fed to a separation unit (e.g., ammonia wash) to remove the ammonia, with the ammonia being recycled to the feed stream or to the fuel mixture. The resulting nitrogen and hydrogen stream is then introduced into a pressure swing adsorber (PSA), wherein a hydrogen gas can be collected as product with low pressure drop. The offgas from the PSA, which contains predominantly nitrogen and unrecovered hydrogen, can then be recycled back to the ammonia cracker to be used as part of the fuel mixture, which provides the necessary heat for the endothermic reaction.

In another known method of hydrogen production using ammonia, the nitrogen and hydrogen can be separated from each other using cryogenic partial condensation instead of a PSA. The advantages of using a cold box, which is the insulated structure that surrounds the process/equipment, is that a higher recovery of hydrogen can be achieved, while also providing a relatively pure nitrogen stream at the same time.

Table I shown below, provides various advantages/disadvantages of the two competing schemes having the same inlet conditions:

**Table I: Advantages and Disadvantages of Hydrogen Production Processes**

| | **Cold Box** | **PSA** |
|---|---|---|
| H₂ Recovery | Higher | Lower |
| H₂ Purity | Lower | Higher |
| H₂ Pressure | Lower (in some setups) | Higher |
| N₂ Separation | Yes | No |
| Fuel Combustion Properties with Ammonia | Unstable | Stable |

Regarding fuel combustion properties, the coldbox method suffers from a less stable flame as compared to a PSA method, since the hydrogen recovery is higher, and therefore, the waste gas coming from the cold box contains very little hydrogen. This lower content directly limits flame stability for the fuel combustion. In short, when using a cold box, almost all of the heat duty comes from ammonia as fuel because mixing a waste gas from the cold box with ammonia provides a resulting mixture with very little hydrogen, and therefore, unstable combustion properties.

Thus, there is a need for a method and apparatus, which can produce high-purity, pressurized hydrogen from ammonia, while also providing for improved hydrogen recovery and stable fuel combustion.

### Summary of the Invention

The present invention is directed to an apparatus and process that satisfies at least one of these needs. In certain embodiments of the invention, a method for producing hydrogen via cracking of ammonia is provided. More specifically, the method can advantageously employ both a cold box and PSA in sequential fashion in order to achieve the advantages noted above.

In combining both of these competing technologies in this novel way, high purity nitrogen and high purity hydrogen can be obtained, while also ensuring that the overall flame stability is achieved.

According to an object of the invention, there is provided a process for the production of hydrogen, the process comprising the steps of: i) introducing an ammonia feed into a catalytic cracker under conditions effective for producing a cracked stream comprised of hydrogen, nitrogen, water vapor, and unreacted ammonia; ii) drying the cracked stream with a temperature swing adsorption (TSA) unit comprising at least two adsorbent beds to form a dry cracked stream; iii) introducing the dry cracked stream into a coldbox, wherein the cold box encloses a heat exchanger and a partial condensation vessel, wherein the heat exchanger is configured to cool the dry cracked stream, wherein the partial condensation vessel is configured to produce a nitrogen enriched stream and a hydrogen enriched stream; and iv) introducing the hydrogen enriched stream, after warming in the heat exchanger, to a pressure swing adsorber (PSA) unit to form a hydrogen product stream and a PSA off-gas.

According to other optional features of the method:
- the catalytic cracker comprises a plurality of burners and a plurality of tube reactors filled with catalyst, the process further comprising the step of combusting a fuel mixture to generate heat for the catalytic cracker.
- the catalytic cracker comprises a cracking vessel having a combustion chamber that is configured to partially combust ammonia flowing into the catalytic cracker, wherein heat provided by the partial combustion of ammonia is used to crack the ammonia to hydrogen and nitrogen within a catalyst bed disposed within the cracking vessel.
- the PSA off-gas is combined with a fuel and combusted to provide heat for the catalytic cracker.
- the TSA off-gas is combined with a fuel and combusted to provide heat for the catalytic cracker.
- the process further comprises the step of withdrawing a waste gas from the cold box, heating the waste gas in a regeneration heater, and then using the waste gas to regenerate one of the adsorbers within the TSA unit.
- the process further comprises the step of combining at least a first portion of the PSA off-gas with the waste gas upstream of the regeneration heater.
- the process further comprises the step of combining at least a second portion of the PSA off-gas with the dry cracked stream upstream the coldbox in order to improve overall hydrogen recovery.
- the process further comprises the steps of monitoring compositions of a fuel feed, a TSA off-gas, and the PSA off-gas, and adjusting a flow rate of a second portion of PSA off-gas combined with the dry cracked stream based on the monitored compositions.
- the flow rate of the second portion of the PSA off-gas is increased until a hydrogen content of a fuel mixture sent to burners of the catalytic cracker is between 17-23%.
- the process further comprises, prior to step ii), the step of introducing the cracked stream into a water wash in order to reduce an ammonia concentration within the cracked stream.
- the process further comprises the steps of monitoring the ammonia concentration of the cracked stream, and determining whether the cracked stream is sent to the water wash or sent directly to the TSA unit based on the ammonia concentration of the cracked stream.

According to another object of the invention, there is provided an apparatus for the production of hydrogen. The apparatus may include: a catalytic cracker configured to receive an ammonia feed and produce a cracked stream comprised of hydrogen, nitrogen, water vapor, and unreacted ammonia; a temperature swing adsorption (TSA) unit comprising at least two adsorbent beds, wherein the TSA unit is configured to dry the cracked stream to form a dry cracked stream; a coldbox in fluid communication with an outlet of the TSA unit, the coldbox enclosing a heat exchanger and a partial condensation vessel, wherein the heat exchanger is configured to cool the dry cracked stream, wherein the partial condensation vessel is configured to produce a nitrogen enriched stream and a hydrogen enriched stream; and a pressure swing adsorber (PSA) unit in fluid communication with an outlet of the coldbox, the PSA unit configured to receive the hydrogen enriched stream and form a hydrogen product stream 42 and a PSA off-gas.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### Brief Description of the Drawings

Other features and advantages of the invention will become further apparent via, on the one hand, the following description and, on the other hand, several exemplary embodiments given by way of non-limiting indication and with reference to the attached schematic drawings, in which:
FIG. 1 provides a schematic diagram of an embodiment of the present invention.
FIG. 2 provides a graphical representation of simulation data.

### Detailed Description of the Invention

While the invention will be described in connection with several embodiments, it will be understood that it is not intended to limit the invention to those embodiments. On the contrary, it is intended to cover all the alternatives, modifications and equivalence as may be included within the spirit and scope of the invention defined by the appended claims.

It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure

### Variant I

In the Figure, a vaporized ammonia feed 2 is sent to a plurality of catalytic tube reactors 7 that are located within ammonia cracker 10. The cracking reaction for ammonia is endothermic, and therefore, heat must be added to the system to keep the reaction going. Therefore, fuel stream 4 is fed to burners 5 to provide the necessary heat for the reaction to proceed. A flue gas is produced within the chamber of the cracker 10; however, this stream is not shown in order to not unduly burden the Figure with unnecessary detail.

The resulting cracked stream 12, which contains predominantly hydrogen and nitrogen, as well as unreacted ammonia and traces of water is collected from the tube reactors 7. In embodiments in which the amount of unreacted ammonia is below a given threshold (e.g., below a threshold of 3 mol%, or even 2 mol%, or even 1 mol%, or even 0.5 mol%), cracked stream 12 can be fed directly into temperature swing adsorber 20 by opening valve 17 and using bypass circuit 18; however, if the amount of unreacted ammonia is above the threshold, then an ammonia wash 15 can be used to remove the unreacted ammonia, which can then be recycled upstream for use as feedstock or fuel depending on process needs.

In another embodiment, the ammonia wash can be eliminated from the plant entirely, thereby eliminating the need for a bypass line. In another embodiment without the bypass line, all of cracked stream 12 is sent to ammonia wash 15.

In an optional embodiment, the apparatus and method may include a process control system. In this embodiment, controller is in communication with the indicator 14, which may be configured to measure/determine ammonia concentrations within the cracked stream 12. Based on the measurement/data from the indicator 14, the controller can determine if the ammonia concentration is above or below the threshold, and if the ammonia concentration is low, then the controller can send a signal to open valve 17, thereby allowing for flow of the cracked stream 12 to proceed through the bypass circuit 18.

In certain embodiments, the controller may comprise a processor and memory coupled to the processor, wherein the memory stores instructions that, when executed by the processor, cause the processor to perform operations comprising: comparing the measured ammonia concentration, and adjusting a flow rate the cracked stream through bypass circuit 18 based on the measured ammonia concentration. In a preferred embodiment, the flow rate is adjusted by using control valve 17. In certain embodiments, control valve comprises an on/off type valve such that the flow is either 100% or 0%.

Regardless of whether a wash column is present, the cracked stream 12 is ultimately sent to temperature swing adsorber 20, which contains a plurality of adsorber columns A,B, wherein water, (remaining) unconverted ammonia, and potentially other impurities are removed from the cracked stream 12 in order to form dry cracked stream 22. The water (remaining) unconverted ammonia, and potentially other impurities are removed at this step in order to prevent any freezing that may occur within cold box 30.

Dry cracked stream 22, which contains predominantly hydrogen and nitrogen is then sent to cold box 30, which contains one or more heat exchangers and one or more partial condensation vessel, wherein each of the heat exchangers are configured to cool the entire or a part of the dry cracked gas stream that is then routed to at least one of the one or more partial condensation vessels, wherein the partial condensation vessels are configured to produce a nitrogen enriched stream 34 and a hydrogen enriched stream 32.

In one embodiment, the one or more heat exchangers are configured to cool the stream to a temperature below -207°C. The hydrogen stream can be expanded to produce at least a portion of the cold required within the cold box before being warmed in the same heat exchanger. Warmed and expanded hydrogen stream 32 can then be withdrawn from the cold box (after heating in the heat exchanger) and then sent to pressure swing adsorber (PSA) 40, wherein a pure hydrogen gas stream 42 is collected as product. In an optional embodiment not shown, a booster/compressor (not shown) can be used to pressurize the warmed and expanded hydrogen stream 32 prior to entering PSA 40. Alternatively, a booster/compressor can be used upstream of the cold box for dry cracked stream 22. In another embodiment, the booster/compressor could be coupled to the hydrogen expander, thereby providing additional compression energy without requiring as much electrical power requirements for the booster/compressor.

PSA off gas 44, which contains less nitrogen as compared to the PSA off gas of the prior art (*See.,* e.g., Table II, *infra,* "N₂ in Fuel "), can be recycled and mixed with fuel 4. Since this stream 44 has a lower composition of nitrogen as compared to that of the prior art, the resulting fuel mix has better combustion properties as less non-combustible, inert nitrogen is in the fuel mix. This also benefits the overall process energy efficiency as this inert gas does not need to be heated to more than 1000°C in the flame and subsequently cooled down again. Additionally, removal of the nitrogen produces far less NOx during combustion, resulting in the elimination or at least reduction in DeNOx treatments of the flue gas.

Cold box 30 also produces a waste stream 36, which can be used to regenerate the adsorbers A, B of the TSA 20 following heating in regeneration heater 60. Heat for the regeneration heater can be provided by various methods, including, but not limited to electrical heat, heat exchange with other process streams such as flue gas and warmed hydrogen stream 32, particularly if warmed hydrogen stream 32 is compressed in a compressor (not shown) prior to being sent to PSA 40. TSA off gas 24, which contains primarily water and traces of ammonia, can be recycled for use as fuel.

In the embodiment described above, a high hydrogen purity can be achieved, while also collecting a separate nitrogen stream 34. In certain embodiments, the separate nitrogen stream 34 can have a high purity (>99 mol % or even >99.9 mol %), such that the nitrogen stream 34 can be used as a "pure" product. Moreover, by separating this nitrogen out prior to the PSA 40, there are less inerts in the fuel system, thereby allowing for lower fuel consumption and a more stable combustion.

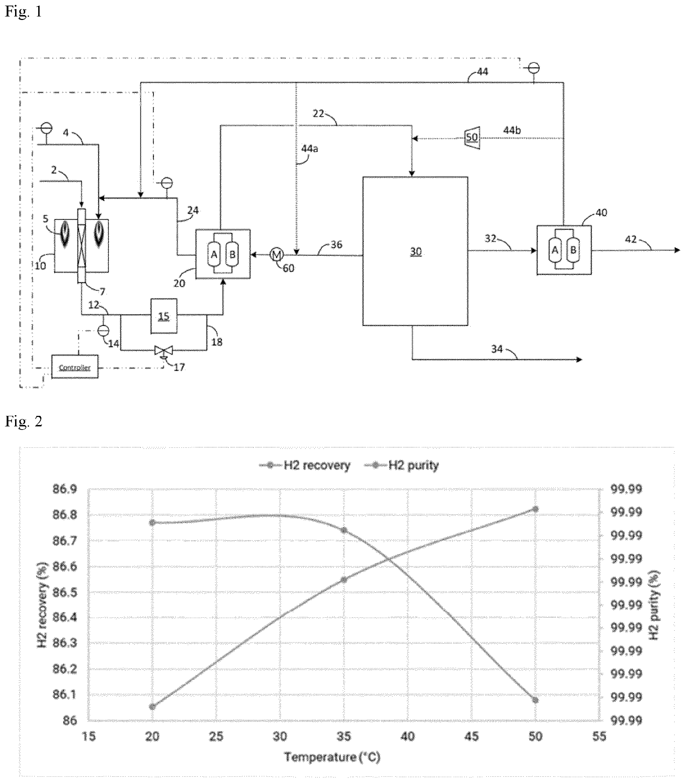

In a preferred embodiment, the outlet temperature of warmed hydrogen stream 32 can be adjusted in order to ensure that it meets the optimum PSA feed temperature. In certain embodiments, a simulation model may be used to generate predictive data. For example, at 30 bars, the effect of feed temperature on hydrogen recovery and purity can be represented in FIG. 2. FIG. 2 shows that the feed temperature near 20°C is well suited for hydrogen production in terms of recovery and purity (max 100 ppm of nitrogen - fuel cell grade).

### Variant II

In another embodiment, particularly one in which the TSA 20 needs more regeneration gas than the waste stream 36 from the cold box can provide, first portion of the PSA off gas 44a can be used to regenerate the TSA. This is especially useful in embodiments without a wash column, which results in a larger amount of ammonia sent to TSA 20. For example, if ammonia concentrations of cracked stream 12 is around 0.3%, a higher regeneration flow rate of 15% of the feed 12 to the TSA 20 is desired, which can easily be covered using first portion of the PSA off gas 44a.

### Variant III

In another embodiment, a second portion of PSA off gas 44b can be compressed in compressor 50 and recycled back to cold box 30 in order to increase the overall hydrogen recovery. While this reduces overall hydrogen sent to the burners via PSA off gas 44, flame stability can still be maintained so long as the fuel mixture comprises a minimum amount of hydrogen. In certain embodiments, the minimum hydrogen that can achieve flame stability can be between 17-23%, more preferably around 20%. Another feature of this embodiment can allow for a control option, such that the composition of streams 44, 24 and 4 can be measured, and the flow rate of 44b can be adjusted based on the measured flow rates in order to deliver a predetermined composition of fuel mixture to the burners.

In certain embodiments, the memory of the processor can include further instructions that, when executed by the processor, cause the processor to perform operations comprising: comparing the measured compositions within PSA off gas 44, TSA off gas 24, and incoming fuel stream 4, and adjusting a flow rate of second portion of PSA off gas 44b via compressor 50 based on the measured compositions of streams 44, 24, and 4.

### Variant IV

In another embodiment, both first and second portions of PSA off gas 44a, 44b are present. This embodiment advantageously allows for high hydrogen product pressure, high hydrogen purity, reduced amounts of ammonia needed for feed (to produce a given amount of hydrogen), an adjustable hydrogen ration in the fuel mixture, reduced amounts of inerts (e.g., nitrogen) in the fuel mixture, higher firing power of the fuel, which thereby lowers flow rates of the flue gas.

**Table II below presents various operational conditions and results for various embodiments discussed above.**

| | **Only PSA** | **Only Cryo** | **Variant I** | **Variant II** | **Variant III** | **Variant IV** |
|---|---|---|---|---|---|---|
| H₂ Product (Nm³/hr) | 100 | 100 | 100 | 100 | 100 | 100 |
| H₂ Product Pressure (bar) | 25 | 13 | 25 | 25 | 25 | 25 |
| H₂ Purity (mol %) | >99.99 | 98 | >99.99 | >99.99 | >99.99 | >99.99 |
| H₂ Recovery (%) | 87 | 94 | 84 | 84 | 95 | 88 |
| H₂ in Fuel (%) | 25 | 20* | 53 | 53 | 20 | 41 |
| N₂ in Fuel (%) | 56 | 30 | 29 | 29 | 28 | 29 |
| NH₃ Cracked (tonnes/hr) | 60 | 54 | 61 | 61 | 54 | 58 |
| Firing Duty (MW) | 104 | 73 | 79 | 79 | 74 | 76 |
| Flue Gas Flow Rate (kmol/hr) | 7158 | 4460 | 4383 | 4373 | 4479 | 4397 |

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims. The present invention may suitably comprise, consist or consist essentially of the elements disclosed and may be practiced in the absence of an element not disclosed. Furthermore, if there is language referring to order, such as first and second, it should be understood in an exemplary sense and not in a limiting sense. For example, it can be recognized by those skilled in the art that certain steps can be combined into a single step.

The singular forms "a", "an" and "the" include plural referents, unless the context clearly dictates otherwise.

"Comprising" in a claim is an open transitional term which means the subsequently identified claim elements are a nonexclusive listing (i.e., anything else may be additionally included and remain within the scope of "comprising"). "Comprising" as used herein may be replaced by the more limited transitional terms "consisting essentially of" and "consisting of' unless otherwise indicated herein.

"Providing" in a claim is defined to mean furnishing, supplying, making available, or preparing something. The step may be performed by any actor in the absence of express language in the claim to the contrary.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

## Claims

1. A process for the production of hydrogen, the process comprising the steps of:
i) introducing an ammonia feed (2) into a catalytic cracker (10) under conditions effective for producing a cracked stream (12) comprised of hydrogen, nitrogen, water vapor, and unreacted ammonia;
ii) drying the cracked stream with a temperature swing adsorption (TSA) unit (20) comprising at least two adsorbent beds (A, B) to form a dry cracked stream (22);
iii) introducing the dry cracked stream into a coldbox (30), wherein the cold box encloses a heat exchanger and a partial condensation vessel, wherein the heat exchanger is configured to cool the dry cracked stream, wherein the partial condensation vessel is configured to produce a nitrogen enriched stream (34) and a hydrogen enriched stream (32); and
iv) introducing the hydrogen enriched stream (32), after warming in the heat exchanger, to a pressure swing adsorber (PSA) unit (40) to form a hydrogen product stream (42) and a PSA off-gas (44).

2. The process as claimed in any of the preceding claims, wherein the catalytic cracker comprises a plurality of burners and a plurality of tube reactors filled with catalyst, the process further comprising the step of combusting a fuel mixture to generate heat for the catalytic cracker.

3. The process as claimed in any of the preceding claims, wherein the catalytic cracker comprises a cracking vessel having a combustion chamber that is configured to partially combust ammonia flowing into the catalytic cracker, wherein heat provided by the partial combustion of ammonia is used to crack the ammonia to hydrogen and nitrogen within a catalyst bed disposed within the cracking vessel.

4. The process as claimed in any of the preceding claims, wherein the PSA off-gas (44) is combined with a fuel (4) and combusted to provide heat for the catalytic cracker.

5. The process as claimed in any of the preceding claims, wherein the TSA off-gas (24) is combined with a fuel (4) and combusted to provide heat for the catalytic cracker.

6. The process as claimed in any of the preceding claims, further comprising the step of withdrawing a waste gas (36) from the cold box (30), heating the waste gas (36) in a regeneration heater (60), and then using the waste gas (36) to regenerate one of the adsorbers (A, B) within the TSA unit (20).

7. The process as claimed in Claim 6, further comprising the step of combining at least a first portion of the PSA off-gas (44a) with the waste gas (36) upstream of the regeneration heater (60).

8. The process as claimed in any of the preceding claims, further comprising the step of combining at least a second portion of the PSA off-gas (44b) with the dry cracked stream (22) upstream the coldbox (30) in order to improve overall hydrogen recovery.

9. The process as claimed in Claim 8, further comprising the steps of monitoring compositions of a fuel feed (4), a TSA off-gas (24), and the PSA off-gas (44), and adjusting a flow rate of the second portion of PSA off-gas (44b) combined with the dry cracked stream (22) based on the monitored compositions.

10. The process as claimed in Claim 9, wherein the flow rate of the second portion of the PSA off-gas (44b) is increased until a hydrogen content of a fuel mixture sent to burners (5) of the catalytic cracker (10) is between 10-50%, preferably 17-23%.

11. The process as claimed in any of the preceding claims, further comprising, prior to step ii), the step of introducing the cracked stream into a water wash (15) in order to reduce an ammonia concentration within the cracked stream.

12. The process as claimed in Claim 11, further comprising the steps of monitoring the ammonia concentration of the cracked stream, and determining whether the cracked stream is sent to the water wash or sent directly to the TSA unit (20) based on the ammonia concentration of the cracked stream.

13. An apparatus for the production of hydrogen, the apparatus comprising:
a catalytic cracker (10) configured to receive an ammonia feed and produce a cracked stream (12) comprised of hydrogen, nitrogen, water vapor, and unreacted ammonia;
a temperature swing adsorption (TSA) unit (20) comprising at least two adsorbent beds (A, B), wherein the TSA unit is configured to dry the cracked stream to form a dry cracked stream (22);
a coldbox in fluid communication with an outlet of the TSA unit, the coldbox enclosing a heat exchanger and a partial condensation vessel, wherein the heat exchanger is configured to cool the dry cracked stream, wherein the partial condensation vessel is configured to produce a nitrogen enriched stream (34) and a hydrogen enriched stream (32); and
a pressure swing adsorber (PSA) unit (40) in fluid communication with an outlet of the coldbox, the PSA unit configured to receive the hydrogen enriched stream (32) and form a hydrogen product stream (42) and a PSA off-gas (44).
